# FASCICULE DE BREVET EUROPEEN

(11) **EP 0 329 565 B1**
(45) Date de publication et mention de la délivrance du brevet: **07.12.1994**
(21) Numéro de dépôt: 89400456.3
(22) Date de dépôt: 17.02.1989
(51) Int. Cl.: A61C 7/00

(54) **Dispositif de fixation d'arc en orthodontie**
Befestigungsvorrichtung für einen orthodontischen Drahtbogen
Fastening device for an orthodontic wire arch

(30) Priorité: 19.02.1988 FR 8802017
(43) Date de publication de la demande: 23.08.1989
(73) Titulaire: Sadoun, Michael, F-92400 Courbevoie (FR)
(72) Inventeur: Sadoun, Michael, F-92400 Courbevoie (FR); Decker, Alain, F-91700 Sainte Geneviève des Bois (FR)
(74) Mandataire: Nony, Michel

(56) Documents cités:
- EP-A- 0 161 831
- FR-A- 2 559 059
- US-A- 4 322 206

## Description

La présente invention est relative à un nouveau dispositif de fixation d'arc en orthodontie et à son procédé de fabrication.

On sait que l'on utilise couramment en orthodontie des dispositifs connus sous le nom de "bracket" qui sont collés sur la face externe des dents et qui sont rendus solidaires d'un fil métallique qui exerce des contraintes élastiques permettant de modifier les positions relatives des dents concernées.

De tels brackets sont actuellement réalisés en acier inoxydable ou en alliage nickel/chrome, ce qui les rend inesthétiques car très visibles lorsqu'ils sont appliqués sur la denture.

Il est également connu de réaliser ces brackets à l'aide de matières plastiques transparentes mais celles-ci se dégradent chimiquement après des temps d'utilisation assez courts et ne présentent pas une rigidité mécanique suffisante.

Le document FR-A-2 559 059 décrit un bracket réalisé en zircone, partiellement stabilisé, mais qui ne comporte pas d'adjonction d'oxyde de fer, de l'oxyde de manganèse ou de l'oxyde de nickel dans la masse, avant frittage pour influencer la teinte et translucidité du bracket.

On a également imaginé de réaliser des brackets en alumine frittée, mais ces derniers sont fragiles et d'un prix de revient élevé.

La présente invention concerne des brackets faciles à réaliser économiquement, présentant d'excellentes qualités mécaniques notamment en ce qui concerne leur ténacité et dont l'aspect, notamment en ce qui concerne la teinte et la translucidité, correspond à celui des dents sur lesquelles ils doivent être collés.

La présente invention a pour objet un bracket en céramique, caractérisé par le fait qu'il est réalisé en oxyde de zirconium partiellement stabilisé additionné d'oxydes de métaux de transition et fritté, qu'il est non poreux et qu'il possède une teinte et une translucidité correspondant sensiblement à celles des dents.

Dans un mode de réalisation préféré le grain de la céramique est inférieur à 0,5 microns en étant par exemple compris entre 0,2 et 0,5 microns.

Selon l'invention, il est également avantageux qu'en dehors des additifs indiqués ci-dessus l'oxyde de zirconium contienne moins de 0,01 pour cent en poids d'impuretés.

La présente invention a également pour objet un procédé de fabrication de brackets, caractérisé par le fait que l'on prépare une poudre d'oxyde de zirconium (zircone) partiellement stabilisé; que l'on y ajoute un liant organique soluble dans l'eau et un ou plusieurs oxydes de métaux de transition dans des proportions correspondant à la teinte et au degré de translucidité que l'on desire conférer au bracket ; que l'on atomise la poudre d'oxyde de zirconium partiellement stabilisé pour obtenir des agglomérats de particules ; que l'on moule par pressage le mélange ainsi obtenu afin d'obtenir une ébauche crue ; qu'éventuellement on usine cette ébauche crue pour lui donner sa forme et/ou son état de surface définitif ; et que l'on soumet l'ébauche à un frittage.

Conformément à l'invention on utilise de préférence une poudre d'oxyde de zirconium pur qui contient moins de 0,01 % d'impureté.

Conformément à l'invention, l'oxyde de zirconium (ZᵣO₂) est par exemple partiellement stabilisé par adjonction de faibles proportions d'oxyde.

A cet effet, on peut par exemple ajouter à la zircone environ 3 à 8 % et de préférence 3 à 5 % d'oxyde d'ythrium (Y₂O₃), 3 à 10 % et de préférence 3 à 5 % d'oxyde de calcium (CaO), 8 à 15 % et de préférence 8 à 10 % d'oxyde de magnésium (MgO), ou 11 à 20 et de préférence 14 à 17 % d'oxyde de cérium (CeO₂), tous ces pourcentages étant donnés en poids.

L'oxyde de zirconium ainsi partiellement stabilisé se présente sous la forme d'une poudre dont la granulométrie est avantageusement comprise entre 0,02 et 1 micron et de préférence entre 0,1 et 1 micron.

Conformément à l'invention, la poudre d'oxyde de zirconium partiellement stabilisé, est mélangée à un liant organique soluble dans l'eau dans une proportion, comprise par exemple entre 0,5 et 5 % en poids de liant, puis atomisée.

On peut avantageusement utiliser un liant thermoplastique tel que par exemple un alcool de polyvinyle, une cire, une résine acrylique ou de la dextrine.

Conformément à l'invention on incorpore également au mélange un ou plusieurs oxydes de métaux de transition tels que l'oxyde de fer, l'oxyde de manganèse, ou l'oxyde de nickel.

Le choix et les proportions des différents oxydes utilisés s'effectuent en fonction de la coloration que l'on désire donner au bracket réalisé selon l'invention et au degré de translucidité que l'on désire obtenir.

Ces oxydes métalliques peuvent être incorporés soit sous forme pulvérulente ou soit sous forme de sels solubles dans l'eau qui sont mis en solution avant l'atomisation de la poudre et qui, après calcination, libèrent l'oxyde correspondant lors du frittage. Cette dernière méthode présente l'avantage de permettre une bonne répartition des oxydes, une homogénéité de la couleur et une rapidité de réaction.

C'est ainsi que l'on peut utiliser du sulfate de fer hydraté Fe (SO₄), 7H₂O dans une proportion par exemple de 0,02 % à 0,5 % du poids d'oxyde de zirconium, du sulfate de manganèse hydraté Mn (SO₄), H₂O dans une proportion par exemple de 0,001 % à 0,03 % du poids d'oxyde de zirconium ou du sulfate de nickel Ni (SO₄), 6H₂O dans une proportion par exemple de 0,02 % à 0,5 % du poids d'oxyde de zirconium.

Conformément à l'invention, on procède ensuite à une agglomération des particules d'oxyde de zirconium partiellement stabilisé pour obtenir, par une technique classique d'atomisation, des agglomérats de forme de préférence sensiblement sphérique. Ces agglomérats de grains ont par exemple un diamètre compris entre 50 et 200 microns, et de préférence compris entre 80 et 100 microns.

Conformément à l'invention, l'ébauche est obtenue de préférence par pressage uniaxial dans un moule réalisé par exemple en carbure de tungstène, le sens du pressage s'effectuant dans la direction des rainures qui sont réalisées sur le bracket pour positionner le fil métallique et retenir les attaches de ce dernier sur le bracket.

Ce pressage peut être avantageusement réalisé avec des pressions de l'ordre de 750 à 3000 kilos par cm2 ce qui permet d'obtenir des ébauches crues dont la densité varie d'environ 2,5 à plus de 3,5 grammes par centimètre cube.

Pour réaliser le pressage de l'ébauche crue, le mélange contenant le plastifiant est de préférence porté préalablement à une température d'environ 80 à 130 degrés, ce qui facilite l'opération.

Conformément à l'invention, l'usinage que l'on peut réaliser sur l'ébauche crue a pour but principal de réaliser la courbure de la face du bracket qui est destinée à être collée sur la dent.

Cet usinage s'effectue par exemple selon une surface cylindrique qui a par exemple un rayon de 20 à 30 mm, de préférence à l'aide d'une meule diamantée à gros grains (par exemple de 200 à 500 microns) de manière à obtenir un état de surface rugueux pour favoriser le collage du bracket sur la dent.

L'usinage de l'ébauche crue peut avoir également pour objet de procéder à un ébarbage et a un arrondissement des angles de l'ébauche à l'aide d'une meule fine.

Conformément à l'invention, le frittage s'effectue, de préférence à l'air, à une température comprise entre environ 1300°C et 1650°C et de préférence comprise entre 1300 et 1400°C pendent un temps par exemple d'environ 2 à 5 heures et de préférence de 2 à 3 heures.

Le chauffage à la température de frittage peut s'effectuer avec une vitesse de montée en température qui peut être par exemple de 5 a degrés par minute.

Le bracket ainsi obtenu est ensuite ramené progressivement à la température ambiante, par exemple sur une période d'environ 20 à 60 minutes.

Le frittage est avantageusement conduit de manière à obtenir une céramique dont la taille de grain est inférieure à 1 micron et est de préférence comprise entre 0,2 et 0,3 micron.

L'encoche réalisée sur le dessus du bracket doit avoir des dimensions qui correspondent à celles de l'arc métallique qui doit être fixé sur le bracket.

Les arcs couramment utilisés sont par exemple des fils métalliques de 0,56 + ou - 0,02 mm de section.

Dans le cas où ces tolérances ne sont pas respectées, l'on procède à une rectification de l'encoche du bracket à l'aide d'une meule diamantée.

Dans le but de mieux faire comprendre l'invention on va en décrire maintenant à titre d'illustration et sans aucun caractère limitatif, un mode de réalisation représenté sur le dessin annexé dans lequel :
- la figure 1 est une vue en perspective d'un bracket selon l'invention,
- la figure 2 est une vue en coupe selon II-II de la figure 1,
- la figure 3 est une vue en élévation selon la flèche III de la figure 1,
- la figure 4 est une vue schématique du moule de pressage de l'ébauche crue.

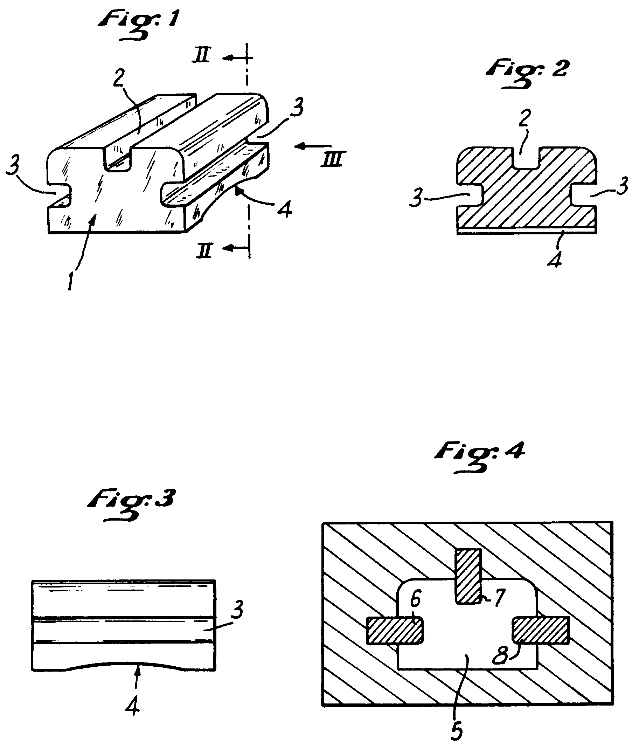

On voit sur les figures 1, 2 et 3 un bracket 1 réalisé conformément à l'invention qui est une pièce de faibles dimensions qui présente par exemple une épaisseur d'environ 2,3 mm, une longueur d'environ 3,5 mm et une largeur d'environ 2,8 mm.

Le bracket 1 comporte une encoche supérieure 2 destinée à recevoir l'arc qui maintient les dents en étant fixé au bracket à l'aide de fils métalliques fins qui s'engagent dans les rainures latérales longitudinales 3 en contournant l'arc métallique qui est situé dans l'encoche 2 pour l'y maintenir.

La face inférieure du bracket est usinée conformément à un mode de réalisation préféré de l'invention avec une forme cylindrique concave 4 pour être collée sur la face externe de la dent.

La surface cylindrique 4 qui peut avoir un rayon d'environ 25 mm est réalisée de manière à présenter une certaine rugosité ce qui amèliore la qualité du collage sur la dent.

La figure 4 est une vue schématique représentant la matrice dans laquelle l'ébauche crue peut être pressée. Cette matrice comporte une cavité 5 dont la forme générale correspond à celle de la section du bracket. Trois tenons démontables 6,7 et 8 font saillie à l'intérieur de la cavité 5 pour constituer l'encoche 2 et les rainures 3.

La compression de l'ébauche s'effectue dans une direction perpendiculaire au plan de la figure 4.

### EXEMPLE 1

Pour réaliser un bracket conformément à l'invention, on peut opérer comme suit :
On part d'une poudre d'oxyde de zirconium ayant une granulométrie moyenne d'environ 0,8 micron et un taux d'impureté de type métallique inférieur à 0,01%.

Cet oxyde de zirconium est partiellement stabilisé par adjonction d'une proportion pondérale de 5 % d'oxyde d'ythrium.

On ajoute environ 1 % en poids d'un liant constitué par un alcool polyvinylique.

On ajoute également au mélange 0,03 % en poids de Fe(SO₄), 7H₂O et 0,02 % en poids de Ni(SO₄), 6H₂O pour conférer au bracket une coloration et une translucidité qui correspond à celles d'une dent.

On procède ensuite à l'atomisation des particules de poudre d'oxyde de zirconium partiellement stablisé pour obtenir des agglomérats sensiblement sphériques qui ont un diamètre d'environ 80 microns.

On procède alors au moulage par compression de l'ébauche crue dans un moule tel que celui représenté sur la figure 4 sous une pression d'environ 800 kg par cm² qui permet d'obtenir une ébauche crue ayant une densité d'environ 2,7 grammes par cm³.

Après quoi, l'on procède à l'ébarbage de l'ébauche et à l'arrondissement des angles des faces terminales et l'on usine l'évidement 4 représenté sur les figures 1,2 et 3 à l'aide d'une meule diamantée qui présente des grains d'environ 300 microns.

On procède ensuite au frittage à l'air de l'ébauche crue en l'introduisant dans un four que l'on porte à la température de 1400°C à raison de 5 degrés par minute.

On maintient à cette température pendant environ 2 heures, après quoi on laisse refroidir l'ébauche dans le four.

On procède enfin au contrôle dimensionnel du bracket et à sa rectification éventuelle.

### EXEMPLE 2

Dans une variante, on utilise un oxyde de zirconium partiellement stabilisé par une adjonction pondérale de 10% d'oxyde de magnésium ou de 9% d'oxyde de calcium, la granulométrie de la poudre de zircone ainsi partiellement stabilisée étant égale à environ 1 micron.

On incorpore ensuite 0,02% en poids d'acétate de fer hydraté (Fe(C₂H₃O₂)2, 4H₂O), 0,002% en poids d'acétate de manganèse hydraté (Mn(C₂H₃O₂)2, 4H₂O) et 0,03% en poids d'acétate de nickel hydraté (Ni(C₂H₃O₂)2, 4H₂O) pour obtenir l'apparence souhaitée. On ajoute 5% en poids de résine acrylique comme liant.

On agglomère cette poudre par atomisation pour obtenir des agglomérats sensiblement sphériques d'environ 200 microns de diamètre.

On réalise le moulage de l'ébauche avec une pression d'environ 3000 kilos par cm² ce qui permet d'obtenir une densité d'environ 3,4 grammes par cm³.

Le frittage s'effectue à l'air en élevant la température du four à raison de 10 degrés par minute, jusqu'à 1550°C, température qui est maintenue pendant environ 4 heures, après quoi, on laisse refroidir le bracket qui est ensuite vérifié et éventuellement rectifié.

### EXEMPLE 3

On part d'une poudre d'oxyde de zirconium partiellement stabilisée avec 16 % en poids d'oxyde de cérium (CéO₂) qui a une granulométrie d'environ 0,3 microns.

On ajoute environ 1 % en poids d'un liant à base d'alcool polyvinylique.

Pour conférer au bracket sa coloration et sa translucidité on ajoute au mélange 0,01 % en poids de sulfate de fer heptahydraté (Fe(SO₄), 7H₂O), 0,03 % de sulfate de nickel hexahydraté (Ni (SO₄), 6H₂O) et 0,01 % en poids de sulfate de manganèse heptahydraté (Mn (SO₄), 7H₂O). On procède à l'atomisation de manière à avoir des agglomérats sensiblement sphériques ayant un diamètre d'environ 150 microns.

On procède alors au moulage de l'ébauche crue sous une pression d'environ 2.000 kgs au cm² ce qui permet d'obtenir une ébauche ayant une densité d'environ 3,1 grammes par cm³.

Après avoir procédé à la finition de l'ébauche on réalise le frittage en portant l'ébauche de la température ambiante à 700°C par une élévation de 2°C/mn. On porte ensuite à 1600°C avec une élévation de 5°C/mn et l'on maintient pendant 3 heures à la température de 1600°C.

Après refroidissement on procède au rectifiage de la base de l'ébauche avec une meule diamant ayant un grain d'environ 200 microns.

Il est bien entendu que les exemples ci-dessus n'ont été donnés qu'à titre indicatif et qu'ils peuvent recevoir toutes modifications désirables sans sortir pour cela du cadre de l'invention.

## Revendications

1. Bracket en céramique frittée à base d'oxyde de zirconium partiellement stabilisé par adjonction de faible quantité d'oxyde, caractérisé par le fait que le bracket est non poreux et qu'il acquiert après frittage une teinte et une translucidité correspondant sensiblement à celles des dents, grâce à l'adjonction supplémentaire d'oxyde de métaux de transition.

2. Bracket selon la revendication 1, caractérisé par le fait qu'il a une taille de grain inférieure à 1 micron et de préférence comprise entre 0,2 et 0,5 micron.

3. Bracket selon l'une des revendications 1 et 2, caractérisé par le fait qu'en dehors des constituants visés à la revendication 1 il contient moins de 0,01 % d'autres impuretés.

4. Bracket selon au moins une des revendications précédentes, caractérisé par le fait que l'oxyde de zirconium est partiellement stabilisé par adjonction de 3 à 8 % et de préférence 3 à 5 % en poids d'oxyde d'ythrium, de 3 à 10 % en poids et de préférence 3 à 5 % en poids d'oxyde de calcium, de 8 à 15 % en poids et de préférence de 8 à 10 % en poids d'oxyde de magnésium, ou de 11 à 20 % en poids, et de préférence 14 à 17 % en poids d'oxyde de Cérium.

5. Bracket selon l'une quelconque des revendications précédentes, caractérisé par le fait que les oxydes de métaux de transition sont choisis parmi l'oxyde de fer, l'oxyde de manganèse et l'oxyde de nickel.

6. Procédé de fabrication d'un bracket du type dans lequel on mélange à un liant, une poudre d'oxyde de zirconium stabilisé, caractérisé par le fait que l'on ajoute à la poudre d'oxyde de zirconium partiellement stabilisé un liant organique soluble dans l'eau et au moins un oxyde de métaux de transition dans des proportions correspondant à la teinte et au degré de translucidité que l'on désire conférer au bracket ; que l'on atomise ce mélange pour obtenir des agglomérats de particules ; que l'on moule par pressage les agglomérats ainsi obtenus afin d'obtenir une ébauche crue ; qu'éventuellement on usine l'ébauche ainsi obtenue pour lui donner sa forme et/ou son état de surface définitifs et que l'on soumet l'ébauche à un frittage.

7. Procédé selon la revendication 6, caractérisé par le fait que l'oxyde de zirconium contient moins de 0,01 % d'impuretés de type métallique.

8. Procédé selon l'une quelconque des revendications 6 et 7, caractérisé par le fait que l'oxyde de zirconium est partiellement stabilisé par adjonction de faible proportion d'oxyde.

9. Procédé selon la revendication 8, caractérisé par le fait que l'oxyde de zirconium est partiellement stabilisé par adjonction de 3 à 8 % et de préférence 3 à 5 % en poids d'oxyde d'ythrium, de 3 à 10 % en poids et de préférence 3 à 5 % en poids d'oxyde de calcium, de 8 à 15 % en poids et de préférence de 8 à 10 % en poids d'oxyde de magnésium, ou de 11 à 20 % en poids, et de préférence 14 à 17 % en poids d'oxyde de Cérium.

10. Procédé selon l'une quelconque des revendications 6 à 9, caractérisé par le fait que l'oxyde de zirconium partiellement stabilisé se présente sous la forme d'une poudre dont la granulométrie est comprise entre 0,02 et 1 micron.

11. Procédé selon l'une quelconque des revendications 6 à 10, caractérisé par le fait que la poudre d'oxyde de zirconium partiellement stabilisé est traitée par atomisation pour obtenir des agglomérats sensiblement sphériques.

12. Procédé selon la revendication 11, caractérisé par le fait que les agglomérats ont un diamètre compris entre environ 50 et 200 microns et de préférence entre 80 et 100 microns.

13. Procédé selon l'une quelconque des revendications 6 à 12, caractérisé par le fait que le liant organique soluble dans l'eau est introduit dans une proportion comprise entre environ 0,5 et 5 % en poids par rapport à l'oxyde de zirconium.

14. Procédé selon l'une quelconque des revendications 6 à 13, caractérisé par le fait que les oxydes de métaux de transition sont choisis parmi l'oxyde de fer, l'oxyde de manganèse et l'oxyde de nickel.

15. Procédé selon l'une quelconque des revendications 6 à 14, caractérisé par le fait que les oxydes métalliques sont incorporés sous forme pulvérulente ou sous forme de sels solubles qui après calcination, libèrent l'oxyde correspondant.

16. Procédé selon l'une quelconque des revendications 6 à 15, caractérisé par le fait que le pressage de l'ébauche est réalisé avec des pressions comprises entre environ 750 et 3000 kg/cm2.

17. Procédé selon l'une quelconque des revendications 6 à 16, caractérisé par le fait que le pressage de l'ébauche est tel qu'il permet d'obtenir pour cette dernière une densité comprise d'environ 2,5 à plus de 3 g/cm3.

18. Procédé selon l'une quelconque des revendications 6 à 17, caractérisé par le fait que l'on usine la partie de l'ébauche crue qui correspond à la surface du bracket qui doit être collée sur la dent à l'aide d'une meule à gros grains, par exemple de 200 à 500 microns.

19. Procédé selon l'une quelconque des revendications 6 à 18, caractérisé par le fait que le frittage s'effectue à une température comprise entre environ 1300 et 1650° C et de préférence entre 1300 et 1400° C.

20. Procédé selon l'une quelconque des revendications 6 à 19, caractérisé par le fait que le frittage s'effectue pendant une durée d'environ au moins 2 heures.

21. Procédé selon l'une quelconque des revendications 6 à 20, caractérisé par le fait que le frittage est conduit de manière à obtenir une céramique ayant une taille de grain inférieure à 1 micron et de préférence comprise entre 0,2 et 0,3 microns.

## Claims

1. Bracket made of sintered ceramic based on zirconium oxide which is partially stabilized by addition of a small quantity of oxide, characterized in that the bracket is non-porous and that it acquires, after sintering, a colour and translucence substantially corresponding to those of teeth, by virtue of the supplementary addition of transition metal oxide.

2. Bracket according to Claim 1, characterized in that it has a grain size of less than 1 micron and preferably lying between 0.2 and 0.5 micron.

3. Bracket according to one of Claims 1 and 2, characterized in that, apart from the constituents referred to in Claim 1, it contains lean than 0.01 % of other impurities.

4. Bracket according to at least one of the preceding claims, characterized in that the zirconium oxide is partially stabilized by addition of from 3 to 8 % and preferably 3 to 5 % by weight of yttrium oxide, from 3 to 10 % by weight and preferably 3 to 5 % by weight of calcium oxide, from 0 to 15 % by weight and preferably from 8 to 10 % by weight of magnesium oxide, or from 11 to 20 % by weight, and preferably 14 to 17 % by weight of cerium oxide.

5. Bracket according to any one of the preceding claims, characterized in that the transition metal oxides arc chosen from iron oxide, manganese oxide and nickel oxide.

6. Method for producing a bracket, of the type in which a stabilized zirconium oxide powder is mixed with a binder, characterized in that a water-soluble organic binder and at least one transition metal oxide are added to the partially stabilized zirconium oxide powder in proportions corresponding to the colour and to the degree of translucence which it is desired to impart to the bracket; in that this mixture is atomized in order to obtain agglomerates of particles; in that the agglomerates thus obtained are moulded by pressing in order to obtain a green preform; in that the preform thus obtained is optionally machined in order to give it its final shape and/or surface condition and in that the preform is subjected to sintering.

7. Method according to Claim 6, characterized in that the zirconium oxide contains less than 0.01 % of impurities of metallic type.

8. Method according to either one of Claims 6 or 7, characterized in that the zirconium oxide is partially stabilized by addition of a low proportion of oxide.

9. Method according to Claim 8, characterized in that the zirconium oxide is partially stabilized by addition of from 3 to 8 % and preferably 3 to 5 % by weight of yttrium oxide, from 3 to 10 % by weight and preferably 3 to 5 % by weight of calcium oxide, from 8 to 15 % by weight and preferably from 8 to 10 % by weight of magnesium oxide, or from 11 to 20 % by weight, and preferably 14 to 17 % by weight of cerium oxide.

10. Method according to any one of Claims 6 to 9, characterized in that the partially stabilized zirconium oxide is in the form of a powder whose size grading lies between 0.02 and 1 micron.

11. Method according to any one of Claims 6 to 10, characterized in that the partially stabilized zirconium oxide powder is treated by atomization in order to obtain substantially spherical agglomerates.

12. Method according to Claim 11, characterized in that the agglomerates have a diameter lying between approximately 50 and 200 microns and preferably between 80 and 100 microns.

13. Method according to any one of Claims 6 to 12, characterized in that the water-soluble organic binder is introduced in a proportion lying between approximately 0.5 and 5 % by weight with respect to the zirconium oxide.

14. Method according to any one of Claims 6 to 13, characterized in that the transition metal oxides are chosen from iron, manganese oxide and nickel oxide.

15. Method according to any one of Claims 6 to 14, characterized in that the metal oxides are incorporated in pulverulent form or in the form of soluble salts which, after calcining, release the corresponding oxide.

16. Method according to any one of Claims 6 to 15, characterized in that the pressing of the preform is carried out with pressures lying between approximately 750 and 3000 kg/cm².

17. Method according to any one of Claims 6 to 16, characterized in that the pressing of the preform is such that it makes it possible to obtain, for the latter, a density lying between approximately 2.5 to more than 3 g/cm³.

18. Method according to any one of Claims 6 to 17, characterized in that that part of the green preform which corresponds to the surface of the bracket which is to be bonded onto the tooth is machined using a grinder with coarse grains, for example from 200 to 500 microns.

19. Method according to any one of Claims 6 to 18, characterized in that the sintering is carried out at a temperature lying between approximately 1300 and 1650°C and preferably between 1300 and 1400°C.

20. Method according to any one of Claims 6 to 19, characterized in that the sintering is carried out for a duration of approximately at least 2 hours.

21. Method according to any one of Claims 6 to 20, characterized in that the sintering is carried out so as to obtain a ceramic having a grain size less than 1 micron and preferably lying between 0.2 and 0.3 microns.

## Patentansprüche

1. Halterung (Klammer) aus Sinterkeramik auf Basis von durch Zusatz an einer geringen Menge eines Oxids teilweise stabilisiertem Zirkoniumoxid, dadurch gekennzeichnet, daß die Klammer nicht porös ist und ihr nach dem Sintervorgang ein deutlich den Zähnen entsprechendes Aussehen und eine entsprechende Durchsichtigkeit aufgrund des ergänzeuden Zusatzes an Übergangsmetalloxiden verliehen wird.

2. Halterung gemäß Anspruch 1, dadurch gekennzeichnet, daß der Korngrößendurchmesser weniger als 1 µm und vorzugsweise zwischen 0,2 und 0,5 µm beträgt.

3. Halterung gemäß einem der Ansprüche 1 und 2, dadurch gekennzeichnet, daß abgesohen von den Bestandteilen gemäß Anspruch 1 weniger als 0,01 % anderer Verunreinigungen enthalten sind.

4. Halterung gemäß mindestens einem der vorhergebenden Ansprüche, dadurch gekennzeichnet, daß das Zirkoniumoxid durch den Zusatz von 3 bis 8 Gew.-% und vorzugsweise 3 bis 5 Gew.-% Yttriumoxid, 3 bis 10 Gew.-% und vorzugsweise 3 bis 5 Gew.-% Kalziumoxid, 8 bis 15 Gew.-% und vorzgsweise 8 bis 10 Gew.-% Magnesiumoxid oder 11 bis 20 Gew` -% und vorzugsweise 14 bis 17 Gew.-% Ceroxid teilstabilisiert ist.

5. Halterung gemäß einem der vorangegangenen Ansprüche, dadurch gekennzeichnet, daß die Übergangsmetalloxide unter Eisenoxid, Manganoxid und Nickeloxid ausgewählt sind.

6. Verfahren zur Herstellung einer Halterung von der Art, bei der pulverisiertes, stabilisiertes Zirkoniumoxid mit einem Bindemittel vermischt wird, dadurch gekennzeichnet, daß zu teilstabilisiertem, pulverisiertem Zirkoniumoxid ein in Wasser lösliches, organisches Bindemittel sowie mindestens ein Übergangsmetalloxid in einer Menge hinzugegeben werden, welche ausreicht, der Klammer das gewünschte Aussehen und gewünschte Maß an Durchsichtigkeit zu verleihen, wobei diese Mischung zum Erhalt von Teilchenagglomeraten versprüht und zum Erhalt eines Rohprodukts die so erhaltenen Agglomerate unter Druck vermahlt sowie gegebenenfalls das so erhaltene rohe Vorprodukt zur Formgebung und/oder zur Erzielung der endgültigen Oberfläche weiterverarbeitet und das Vorprodukt einem Sinterprozeß zuführt.

7. Verfahren gemäß Anspruch 6, dadurch gekennzeichnet, daß das Zirkoniumoxid mindestens 0,01 % Verunreinigungen vom Metalltyp aufweist.

8. Verfahren gemäß einem der Ansprüche 6 und 7, dadurch gekennzeichnet, daß das Zirkoniumoxid durch den Zusatz einer geringen Oxidmenge teilstabilisiert wird.

9. Verfahren gemäß Anspruch 8, dadurch gekennzeichnet, daß das Zirkoniumoxid durch den Zusatz von 3 bis 8 Gew.-% und vorzugsweise 3 bis 5 Gew.-% an Yttriumoxid, 3 bis 10 Gew.-% und vorzugsweise 3 bis 5 Gew.-% an Kalziumoxid, 8 bis 15 Gew.-% und vorzugsweise 8 bis 10 Gew.-% Magnesiumoxid oder 11 bis 20 Gew.-% und vorzugsweise 14 bis 17 Gew.-% Ceroxid teilstabilisiert wird.

10. Verfahren gemäß einem der Ansprüche 6 bis 9, dadurch gekennzeichnet, daß das teilstabilisierte Zirkoniumoxid in Form eines Pulvers vorliegt, dessen Korngrößenverteilung zwischen 0,02 und 1 µm beträgt.

11. Verfahren gemäß einem der Ansprüche 6 bis 10, dadurch gekennzeichnet, daß das pulverförmige teilweise stabilisierte Zirkoniumoxid zum Erhalt merklich kugelförmiger Agglomererate versprüht wird.

12. Vorfahren gemäß Ansprüch 11, dadurch gekennzeichnet, daß die Agglomerate einem Durchmesser zwischen etwa 50 und 200 µm und vorzugsweise zwischen 80 und 100 µm aufweisen.

13. Verfahren gemäß einem der Ansprüche 6 bis 12, dadurch gekennzeichnet, daß das wasserlösliche organische Bindemittel in einer Menge zwischen etwa 0,5 und 5 Gew.-% in bezug auf das Zirkoniumoxid eingesetzt wird.

14. Verfahren gemäß einem der Ansprüche 6 bis 13, dadurch gekennzeichnet, daß die Übergangsmetalloxide unter Eisenoxid, Manganoxid und Nickeloxid ausgewählt werden.

15. Verfahren gemäß einem der Ansprüche 6 bis 14, dadurch gekennzeichnet, daß die Metalloxide in Form eines Pulvers oder in Form löslicher Salze, welche nach dem Kalzinteren das entsprechende Oxid freisetzen, eingearbeitet werden.

16. Verfahren gemäß einem der Ansprüche 6 bis 15, dadurch gekennzeichnet, daß die Verpressung des Vorproduktes bei einem Druck im Bereich zwischen etwa 750 und 3000 kg/cm² durchgeführt wird.

17. Verfahren gemäß einem der Ansprüche 6 bis 16, dadurch gekennzeichnet, daß das Verpressen des Rohprodukts unter Bedingungen erfolgt, welche eine Dichte des Rohproduktes im Bereich zwischen ungefähr 2,5 und höher bis zu 3 g/cm³ entstehen lassen.

18. Verfahren gemäß einem der Ansprüche 6 bis 17, dadurch gekennzeichnet, daß man die Partie des rohen Vorprodukts weiterverarbeitet, welche der Oberfläche der Halterung entspricht, die am Zahn mittels einer grobförmigen Schleifscheibe, beispielsweise mit einem Korndurchmesser zwischen 200 und 500 µm exakt angepaßt werden soll.

19. Verfahren gemäß einem der Ansprüche 6 bis 18, dadurch gekennzeichnet, daß der Sintervorgang bei einer Temperatur zwischen ungefähr 1300 und 1650 °C und vorzugsweise zwischen 1300 und 1400 °C stattfindet.

20. Verfahren gemäß einem der Ansprüche 6 bis 19, dadurch gekennzeichnet, daß der Sintervorgang während einer Dauer von ungefähr mindestens 2 Stunden durchgeführt wird.

21. Verfahren gemäß einem der Ansprüche 6 bis 20, dadurch gekennzeichnet, daß der Sintervorgang in einer Weise durchgeführt wird, daß ein Keramikkörper mit einer durchschnittlichen Korngröße von kleiner als 1 µm und vorzugsweise ein solcher im Korngrößenbereich zwischen 0,2 und 0,3 µm erhalten wird.
